**Europäisches Patentamt**

**European Patent Office**

**Office européen des brevets**

(19)

(11) Publication number: **0 408 173 B1**

# EUROPEAN PATENT SPECIFICATION

(12)

(45) Date of publication of patent specification: **20.07.94** (51) Int. Cl.⁵: **F16H  1/45**, B60K 17/346

(21) Application number: **90304854.4**

(22) Date of filing: **04.05.90**

(54) **Differential device for vehicle.**

(30) Priority: **14.07.89 JP 180431/89**

(43) Date of publication of application:
**16.01.91 Bulletin  91/03**

(45) Publication of the grant of the patent:
**20.07.94 Bulletin  94/29**

(84) Designated Contracting States:
**BE DE GB IT**

(56) References cited:
**EP-A- 0 313 528**
**DE-A- 3 927 072**
**DE-C- 3 428 865**
**FR-A- 893 311**

(73) Proprietor: **DIESEL KIKI CO., LTD.**
**No. 6-7, Shibuya 3-chome**
**Shibuya-ku Tokyo(JP)**

(72) Inventor: **Ichiki, Shiro, C/o Diesel Kiki Co.Ltd**
**Kohnan Factory,**
**39 Aza Higashihara,**
**Oaza Chiyo**
**Kohnan-Machi, Ohsato-Gun,**
**Saitama-Ken(JP)**
Inventor: **Takefuta, Hideyasu, c/o Diesel Kiki**
**Co.Ltd**
**Kohnan Factory,**
**39 Aza Higashihara,**
**Oaza Chiyo**
**Kohnan-Machi, Ohsato-Gun,**
**Saitama-Ken(JP)**

(74) Representative: **Votier, Sidney David et al**
**CARPMAELS & RANSFORD**
**43, Bloomsbury Square**
**London WC1A 2RA (GB)**

## Description

BACKGROUND OF THE INVENTION

This invention relates to a differential device for use in a vehicle.

In differential devices disclosed in U. S. Patent Nos. 3,735,647, 3,884,096, 4,491,035 and 4,750,383 and Japanese Laid-Open (Kokai) Patent Application No. 50625/74, a drive torque applied to those wheels subjected to a larger surface resistance can be made greater than those wheels subjected to a smaller surface resistance. Here, the surface resistance means $\mu \cdot W$ where $\mu$ represents a frictional coefficient of the road surface, and W represents a load applied to tires.

Explanation will be made with respect to the case where the above conventional differential device is used as a center differential device for a four-wheel drive vehicle. The conventional differential device comprises a housing to which the torque is transmitted from an engine, and a pair of propeller shafts (front and rear propeller shafts) extending into the housing. The front propeller shaft is operatively connected to front wheels whereas the rear propeller shaft is operatively connected to rear wheels. The pair of propeller shafts extend along a common straight line, and one ends of the two propeller shafts are disposed in spaced, opposed relation to each other within the housing. A pair of side gears (sun gears) are connected respectively to the one ends of the two propeller shafts by splines, and therefore a transmission of rotation between each propeller shaft and its mating side gear is achieved. A screw gear portion is formed on the outer periphery of the side gear. At least one pair of element gears (planetary gears) are rotatably mounted within the housing. The axis of rotation of the element gear intersects the axis of rotation of the propeller shaft and the axis of rotation of the side gear. Each element gear has a screw gear portion and coupling gear portions. The screw gear portion of each element gear meshes with the screw gear portion of the mating or corresponding side gear, and the coupling gear portions of the two element gears mesh with each other. A differential gear is constituted by the two side gears and the two element gears meshing with the side gears and also with each other.

The pair of side gears are of the same configuration, and also the pair of element gears are of the same configuration.

Reference is now made to how the drive torque transmitted to the housing is distributed by the above center differential device to the pair of propeller shafts, that is, to the front and rear wheels.

First, explanation will be made with respect to a condition in which the surface resistance of the front wheels is equal to the surface resistance of the rear wheels or a condition in which the drive torques of the front wheels and the rear wheels are smaller than a critical value causing a wheel slip (This condition will be hereinafter referred to as "basic condition"). In this condition, the drive torque transmitted to the front wheels is equal to the drive torque transmitted to the rear wheels, and therefore this torque distribution ratio is 50:50 if the torque applied to the housing is represented as 100.

Next, explanation will be made with respect to a condition in which the surface resistance of the front wheels is small, so that assuming that a half of the drive torque of the housing is applied to the front wheels, the front wheels are subjected to slip. In this case, the drive torque of the front wheels is reduced to a value smaller than the critical value causing a wheel slip whereas the drive torque of the rear wheels is increased.

In contrast to the above case, when the surface resistance of the rear wheels decreases, the drive torque of the front wheels increases whereas the drive torque of the rear wheels decreases.

The above torque distribution ratio in accordance with the surface resistance varies in the range of between 25:75 and 75:25.

In the above center differential device, theoretically, the torque distribution ratio can be varied over a wider range, for example, of 10:90 and 90:10. However, if the variation range of the distribution ratio is increased, the differential function may fail to be properly performed, and undue forces develop in the device, which shortens the service life of the device. For these reasons, generally, the above variation is in the range of between 25:75 and 75:25 or around such value.

However, in the case where the above conventional center differential device is used in a vehicle such as a truck in which a greater load acts on the rear side of the vehicle when the vehicle is fully loaded with freight, it is often not possible to apply a sufficient propelling force to the vehicle. More specifically, in such a vehicle having a greater load acting on the rear side thereof, under the normal road surface condition, the surface resistance of the rear wheels is large whereas the surface resistance of the front wheels is small. Particularly, at the time of an abrupt start of the vehicle or at the time of going up a slope, a still greater load acts on the rear side, so that the surface resistance of the rear wheels greatly differs from the surface resistance of the front wheels. In this case, the drive torque which can be transmitted to the front wheels without causing slip becomes very small with the result that the drive torque transmitted to the rear wheels is correspondingly decreased. The reason is that the upper limit of the distribution ratio is 25:75, and therefore the drive torque of the rear wheels is only three times larger than the drive torque of the front wheels. As a result, it is not possible to apply a sufficient propelling force to the vehicle.

Under the above circumstances, it has been desired to develop a center differential device for the above vehicle, in which the torque distribution ratio of the rear wheels to the front wheels is increased as much as possible, while securing a smooth differential function and a long service life.

In the above-mentioned differential device, the side gear is of a cylindrical shape, and the screw gear portion is formed on the outer periphery thereof, and a spline portion is formed on the inner periphery. The screw gear portion and the spline portion are disposed at the same position in the axial direction of the side gear, and this arrangement has offered the following problems.

The spline portion is required to have a sufficiently large diameter so that the spline portion itself can have a strength commensurate with the drive torque to be transmitted by the spline portion, and also that the propeller shaft received in the side gear can have a sufficient strength. Also, the peripheral wall on which the spline portion is formed is required to have a sufficient thickness to have a required strength. For these reasons, the screw gear portion disposed radially outwardly of the spline portion is increased in diameter, and therefore the element gear in mesh with the screw gear portion is remoter from the axis of rotation of the side gear. As a result, the housing containing the side gears and the element gears, as well as a differential case containing the housing, is increased in diameter. Because of such increased diameter of the differential device, it has been necessary either to increase the height of the vehicle or to reduce the vertical dimension of the passenger room or cabin of the vehicle.

## SUMMARY OF THE INVENTION

It is an object of this invention to provide a differential device in which a drive torque distribution ratio of one of front wheels and rear wheels to the other is increased while securing a smooth differential function and a long service life.

According to the present invention, there is provided a differential device for use in a vehicle having front wheels and rear wheels, comprising:

(a) a housing connectable to a power source of the vehicle so as to be supplied with a drive torque;

(b) a pair of front and rear propeller shafts operatively connected to the front and rear wheels, respectively, the pair of propeller shafts extending along a common straight line into the housing, so that one ends of the two propeller shafts are disposed in opposed relation to each other within the housing;

(c) a pair of side gears connected respectively to the one ends of the pair of front and rear propeller shafts so as to transmit rotations of the two side gears respectively to the two propeller shafts, each of the two side gears having a screw gear portion on its outer periphery, and helix angles of the screw gear portions of the two side gears being different from each other; and

(d) at least one pair of element gears each rotatably mounted on the housing, an axis of rotation of each of the element gears intersecting the axis of rotation of the propeller shafts and the axis of rotation of the side gears, each of the element gears having a screw gear portion and a coupling gear portion, the screw gear portions of the pair of element gears meshing with the screw gear portions of the pair of side gears, respectively, and the coupling gear portions of the pair of element gears meshing with each other.

## BRIEF DESCRIPTION OF THE DRAWINGS

Fig.1 is a cross-sectional view of a center differential device in accordance with the prior art;

Fig.2 is a perspective view of a portion of the differential device of Figure 1, showing an intermeshing between a side gear and element gears;

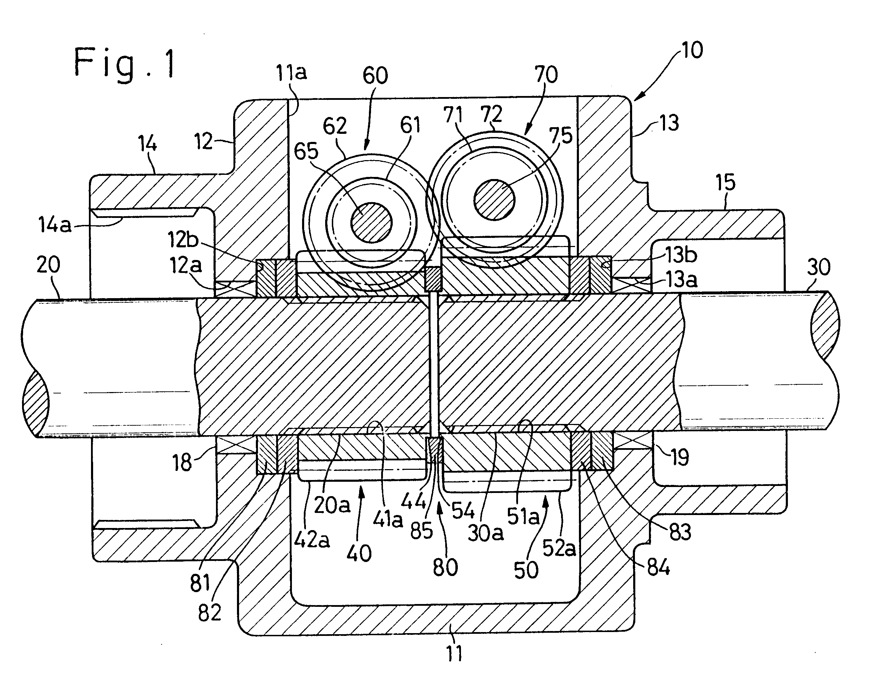

Fig .3 is a side-elevational view of the differential device of Figure 1; and

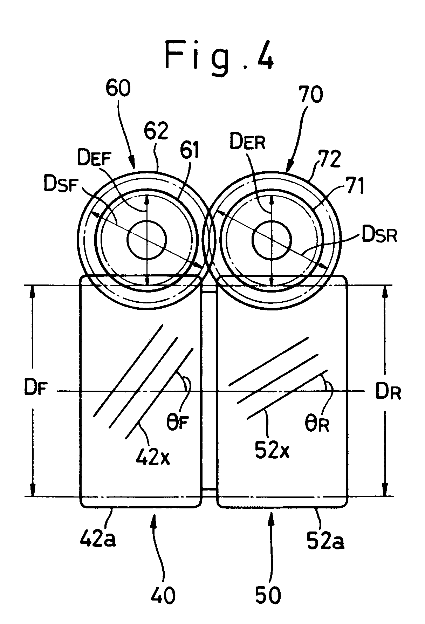

Fig.4 is a side-elevational view of a center differential device in accordance with the invention.

In order to understand the invention it will be convenient, firstly, to describe a device according to the prior art. Such a device is illustrated in Figures 1 to 3.

Fig.1 shows a center differential device for a four-wheel drive vehicle. In Fig.1, the left side of this device is directed toward the front of the vehicle whereas the right side of the device is directed toward the rear of the vehicle. This device comprises a housing 10 which includes a cylindrical portion 11, end walls 12 and 13 formed on opposite ends of the cylindrical portion 11, and auxiliary cylindrical portions 14 and 15 extending respectively from the end walls 12 and 13 along the axis of the cylindrical portion 11. Three openings 11a (only one of which is shown in the drawings) are formed through the peripheral wall of the cylindrical portion 11. A stepped hole 12a having a step 12b is formed through the end wall 12, and similarly a stepped hole 13a having a step 13b is formed through the end wall 13. A spline portion 14a is formed on the inner peripheral surface of the front auxiliary cylindrical portion 14.

The housing 10 is housed in a differential case (not shown), and is rotatably supported on the differential case by bearings (not shown) mounted respectively around the auxiliary cylindrical portions 14 and 15. One end of a hollow shaft (not shown) is received in the auxiliary cylindrical portion 14, and is coupled thereto by spline connection. With this arrangement, a drive torque is transmitted from a power source (engine) to the housing 10 via a clutch, a transmission and the hollow shaft.

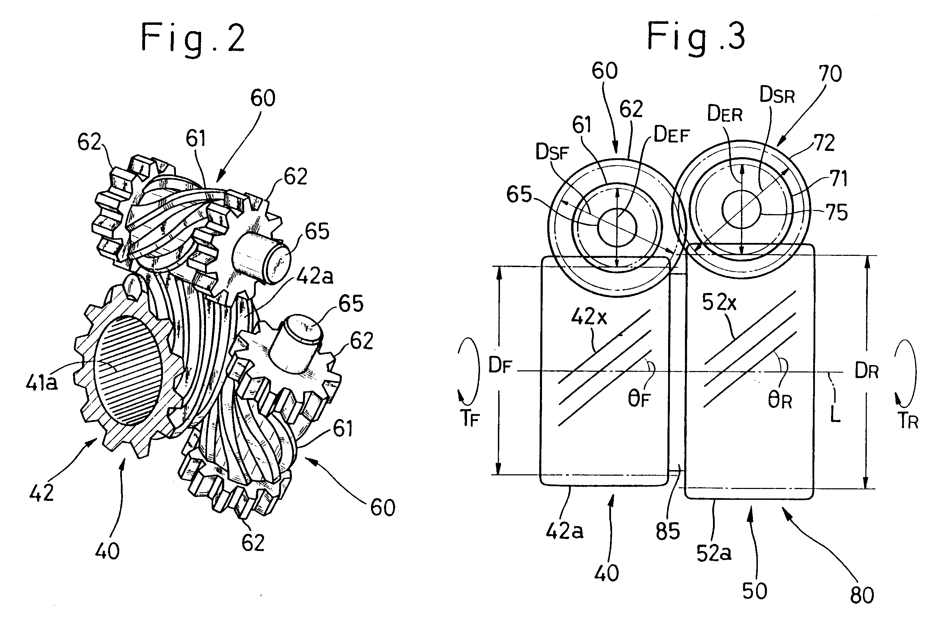

A front propeller shaft 20 extends through the hole 12a in the front end wall 12 of the housing 10, and a rear propeller shaft 30 extends through the hole 13a in the rear end wall 13. The two propeller shafts 20 and 30 extend along a common axis or straight line, and are rotatably supported on the housing 10 through bearings 18 and 19 mounted respectively in the outer or reduced-diameter portions of the holes 12a and 13a. The axes of rotation of the propeller shafts 20 and 30 are in alignment with the axis of rotation of the housing 10. These rotation axes (i.e., common axis) are indicated by reference character L in Fig. 3. The front propeller shaft 20 extends through the above-mentioned hollow shaft, and one end of the front propeller shaft 20 disposed exteriorly of the housing 10 is operatively connected to right and left front wheels via a front differential device. One end of the rear propeller shaft disposed exteriorly of the housing 10 is operatively connected to right and left rear wheels via a rear differential device.

The other ends of the two propeller shafts 20 and 30 are received in the housing 10, and are disposed in spaced, opposed relation to each other. Spline portions 20a and 30a are formed on the outer peripheries of the other ends of the two propeller shafts 20 and 30, respectively. A pair of cylindrical side gears (sun gears) 40 and 50, having spline portions 41a and 51a at their respective inner peripheries, are coupled respectively to the other ends of the two propeller shafts 20 and 30 by spline-connection. With this arrangement, a transmission of rotation between the front propeller shaft 20 and the side gear 40, as well as a transmission of rotation between the rear propeller shaft 30 and the side gear 50, is achieved. Screw gear portions 42a and 52a are formed respectively on the outer peripheries of the side gears 40 and 50. As best shown in Fig. 3, a pitch diameter $D_R$ of the screw gear portion 52a of the rear side gear 50 is greater than a pitch diameter $D_F$ of the screw gear portion 42a of the front side gear 40. The two screw gear portions 42a and 52a are equal to each other in various factors such as a module, a pressure angle, a helix angle and so on, and are different from each other only in the number of teeth. The proportion of the number of teeth to the pitch diameter $D_F$ in the screw gear portion 42a is equal to the proportion of the number of teeth to the pitch diameter $D_R$ in the screw gear portion 52a. In Fig. 3, for the sake of simplicity of the illustration, several teeth 42x of the screw gear portion 42a as well as several teeth 52x of the screw gear portion 52a are schematically indicated by solid lines, and their helix angles are indicated by $\theta_F$ and $\theta_R$, respectively.

Three pairs of element gears 60 and 70 are rotatably mounted on the housing 10, and each pair of element gears 60 and 70 are disposed in registry with a respective one of the three openings 11a, respectively. As best shown in Fig. 2, each front element gear 60 has a screw gear portion 61 and a pair of spur gear portions (coupling gear portions) 62 and 62 of a greater diameter formed respectively adjacent to the opposite ends of the screw gear portion 61. A journal pin 65 extends through the element gear 60, and the opposite ends of the journal pin 65 are respectively received in and supported by holes formed respectively in those portions of the peripheral wall of the housing 10 which are disposed respectively on the opposite sides of the mating opening 11a and are spaced from each other circumferentially of the housing 10. The axis of rotation of each element gear 60 intersects the axis L of rotation of the shafts 20 and 30 and the side gears 40 and 50 at an angle of 90°.

Each rear element gear 70 is similar in shape to the front element gear 60, and has a screw gear portion 71 and a pair of spur gear portions 72 and 72. The rear element gear 70 is rotatably mounted on the housing 10 by a journal pin 75. The axis of rotation of each element gear 70 is parallel to the axis of rotation of its mating front element gear 60.

The ratio ($D_{EF}:D_{ER}$) of a pitch diameter of the screw gear portion 61 of the element gear 60 to a pitch diameter of the screw gear portion 71 of the element gear 70 is equal to the ratio ($D_F:D_R$) of the pitch diameter of the screw gear portion 42a to the pitch diameter of the screw gear portion 52a. The screw gear portions 61 and 71 are equal to each other in various factors such as a module, a pressure angle, a helix angle and so on, and are different from each other only in the number of teeth. The proportion of the number of teeth to the pitch diameter $D_{EF}$ in the screw gear portion 61 is equal to the proportion of the number of teeth to the pitch diameter $D_{ER}$ in the screw gear portion 71. A pitch diameter $D_{SF}$ of the spur gear 62 of the element gear 60 is equal to a pitch diameter $D_{SR}$ of the spur gear 72 of the element gear 70.

The screw gear portion 61 of each front element gear 60 is in mesh with the screw gear portion 42a of the front side gear 40. The screw gear portion 71 of each rear element gear 70 is in mesh with the screw gear portion 52a of the rear side gear 50. The spur gear portions 62 and 72 of each pair of element gears 60 and 70 are in mesh with each other. A differential gear 80 is constituted by this meshing arrangement.

Washers 81 and 82 are interposed between the annular step 12b in the end wall 12 and an end face of the side gear 40 facing the step 12b. Washers 83 and 84 are interposed between the step 13b in the end wall 13 and an end face of the side gear 50 facing the step 13b. A washer 85 is interposed between the opposed end faces of the side gears 40 and 50. Annular recesses 44 and 54 are formed respectively in the opposed end faces of the side gears 40 and 50, and the washer 85 is received in the recesses 44 and 54.

In the above construction, a general operation of the center differential device will now be described. The drive torque is first transmitted from the engine to the housing 10 via the hollow shaft, etc., and is further transmitted from the housing 10 to the propeller shafts 20 and 30 via the differential gear 80.

When the vehicle is running or advancing straight without being subjected to slip, the differential gear 80 is in a non-differential condition in which the element gears 60 and 70 are not rotated.

For example, when the vehicle runs along a curved path or road, the differential gear 80 is operated to rotate the element gears 60 and 70, thereby absorbing a difference between the rotational speeds of the front and rear propeller shafts 20 and 30.

In the above non-differential condition, when the surface resistance at the front wheels is equal to the surface resistance at the rear wheels, or when the drive torques applied respectively to the front and rear wheels are less than critical values (determined by the surface resistance) causing a wheel slip (This condition will be hereinafter referred to as "basic condition"), the drive torques $T_F$ and $T_R$ distributed from the housing 10 respectively to the front and rear propeller shafts 20 and 30 are different from each other, and this distribution ratio is equal to the ratio ($D_F$:$D_R$) of the pitch diameter of the screw gear portion 42a to the pitch diameter of the screw gear portion 52a. This is expressed by the following formula:

$$T_F : T_R = D_F : D_R$$

More specifically, the drive torque from the housing 10 is distributed to the side gears 40 and 50 through the element gears 60 and 70. At this time, the transmissions of the forces from the element gears 60 and 70 to the side gears 40 and 50 are effected respectively through a point of contact between the screw gear portions 42a and 61 and a point of contact between the screw gear portions 52a and 71. Therefore, the torque distribution ratio ($T_F$:$T_R$) of the front propeller shaft 20 to the rear propeller shaft 30 is equal to the ratio of the distance between the above first-mentioned contact point and the rotation axis L and the distance between the above second-mentioned contact point and the rotation axis L, and therefore is substantially equal to the ratio ($D_F$:$D_R$) of the pitch diameter of the side gear 40 to the pitch diameter of the side gear 50.

In this arrangement, the diameter $D_R$ of the rear side gear 50 is greater than the diameter $D_F$ of the front side gear 40, and therefore in the above basic condition, the drive torque $T_R$ (i.e., the sum of the drive torques transmitted respectively to the right and left rear wheels) transmitted to the rear propeller shaft 30 is greater than the drive torque $T_F$ (i.e., the sum of the drive torques transmitted respectively to the right and left front wheels) transmitted to the front propeller shaft 20. In this case, according to the need, the ratio of $T_F$:$T_R$ may be, for example, 45:55 or 35:65.

When the surface resistance at the front wheels is different from the surface resistance at the rear wheels, the torque distribution ratio varies in accordance with the surface resistances, based on the torque distribution ratio in the above basic condition.

Since the mechanism of the above variation of the drive torque distribution ratio in accordance with the surface resistance is well known in the art, this will now be described briefly. Due to axial components of the forces applied from the screw gear portions 61 and 71 of the element gears 60 and 70 respectively to the screw gear portions 42a and 52a of the side gears 40 and 50, a frictional force develops between the side gears 40 and 50, for example, through the washer 85, and a frictional force develops between the side gear 50 and the end wall 13 of the housing 10 through the washers 83 and 84. The torque distribution ratio is varied by these frictional forces, etc.

In this construction, as described above, in the basic condition, the drive torque distributed to the rear propeller shaft 30 is greater than the drive torque distributed to the front propeller shaft 20, and therefore the manner of varying the drive torque distribution ratio is different from that used in the conventional device. More specifically, the range of variation of the torque distribution ratio is shifted in such a direction that the drive torque distributed to the rear propeller shaft 30 is increased. For example, if the torque distribution ratio ($T_F$:$T_R$) in the basic condition is 45:55, this torque distribution ratio varies in the range of between 20:80 and 70:30. If the torque distribution ratio ($T_F$:$T_R$) in the basic condition 35:65, this ratio varies in the range of between 10:90 and 60:40.

As described above, the ratio of the drive torque of the rear wheels to the drive torque of the front wheels can be increased, the device is suited for a vehicle of the type bearing a greater load at the rear side. More specifically, the front wheels bearing a smaller load are subjected to a low surface resistance, and the critical value causing slip of the front wheels is low, and therefore the drive torque of the front wheels can easily reach this critical value. At this time, the torque distribution ratio ($T_F:T_R$) varies in such a manner that the drive torque of the rear wheels is increased. Even if the drive torque of the front wheels is small, the upper limit of the above distribution ratio is, for example, 10:90, and hence the drive torque of the rear wheels can be about nine times greater than the drive torque of the front wheels. Therefore, the drive torque transmitted from the engine can be fully utilized to thereby apply a sufficient propelling force to the vehicle. Particularly, at the time of an abrupt start of the vehicle or at the time of going up a slope, a greater load acts on the rear side of the vehicle, so that the surface resistance of the rear wheels greatly differs from the surface resistance of the front wheels. Even in such a case, with the above distribution ratio of 10:90, the drive torque from the engine can be utilized to the maximum level.

The ratio of the number of teeth of the screw gear portion 42a of the front side gear 40 to the number of teeth of the screw gear portion 61 of the front element gear 60 is equal to the ratio of the number of teeth of the screw gear portion 52a of the rear side gear 50 to the number of teeth of the screw gear portion 71 of the rear element gear 70. Therefore, in a differential condition, if the rotational speed of the housing 10 is represented by $N_0$, the rotational speed of one of the two propeller shafts 20 and 30 is represented by ($N_0$ + a), and the rotational speed of the other is represented by ($N_0$ - a). Thus, the rotational speeds of the two propeller shafts 20 and 30 differ the same amount a from the rotational speed of the housing 10.

Figure 4 shows a device according to the invention. In this device, pitch diameters $D_F$ and $D_R$ of screw gear portions 42a and 52a of side gears 40 and 50 are equal to each other. Pitch diameters $D_{EF}$ and $D_{ER}$ of screw gear portions 61 and 71 of element gears 60 and 70 are equal to each other. Pitch diameters $D_{SF}$ and $D_{SR}$ of spur gear portions 62 and 72 are equal to each other. However, the helix angle $\theta_R$ of the screw gear portion 52a of the rear side gear 50 is smaller than the helix angle $\theta_F$ of the screw gear portion 42a of the front side gear 40. Helix angles of the screw gear portions 61 and 71 of the element gears 60 and 70 are represented by ($90°$ - $\theta_F$) and ($90°$ - $\theta_R$), respectively, and are different from each other. In the basic condition, at the rear side gear 50 having a smaller helix angle $\theta_R$, a circumferential component of the force transmitted from each element gear 70 to the rear side gear 50 is large, and therefore the transmitted drive torque is large. On the other hand, at the front side gear 40 having a larger helix angle $\theta_F$, a circumferential component of the force transmitted from each element gear 60 to the side gear 40 is small, and therefore the transmitted drive torque is small. Therefore, the range of variation of the torque distribution ratio is shifted in such a direction that the drive torque distributed to the rear propeller shaft 30 is increased.

In a vehicle of the type in which the front wheels bear a greater load than the rear wheels, the drive torque distributed to the front wheels in the basic condition may be increased.

The center differential device of the invention can be applied to a vehicle of the type in which an abrupt start performance is considered as being important although the load is borne generally uniformly on the front and rear wheels.

The present invention is not to be restricted to the above embodiment, and various modifications can be made. For example, each of the coupling gear portions of each element gear may be in the form of a helical gear, instead of a spur gear. The coupling gear portions of each element gear may indirectly mesh respectively with the coupling gears of its mating element gear via respective idle gears.

**Claims**

1. A differential device for use in a vehicle having front wheels and rear wheels, comprising:

   (a) a housing (10) connectable to a power source of the vehicle so as to be supplied with a drive torque;

   (b) a pair of front and rear propeller shafts (20, 30) operatively connected to the front and rear wheels, respectively, said pair of propeller shafts extending along a common straight line into said housing (10), so that one ends of said two propeller shafts are disposed in opposed relation to each other within said housing;

   (c) a pair of side gears (40, 50) connected respectively to said one ends of said pair of front and rear propeller shafts (20, 30) so as to transmit rotations of said two side gears respectively to said two propeller shafts, each of said two side gears having a screw gear portion (42a, 52a) on its outer periphery; and

   (d) at least one pair of element gears (60, 70) each rotatably mounted on said housing (10), an axis of rotation of each of said element gears intersecting the axis of rotation of said propeller shafts (20, 30) and the axis of rotation of said side gears (40, 50), each of said element gears (60, 70) having a screw gear portion (61) and a coupling gear portion (62), said screw gear portions (61) of said pair of element gears meshing with said screw gear portions (42a, 52a) of said pair of side gears, respectively, and said coupling gear portions (62) of said pair of element gears meshing with each other; CHARACTERIZED in that:

helix angles ($\theta_F$, $\theta_R$) of said screw gear portions (42a, 52a) of said pair of side gears (40, 50) are different from each other.

2. A differential device according to claim 1, in which the helix angle ($\theta_R$) of said screw gear portion (52a) of said side gear (50) connected to said rear propeller shaft (30) is smaller than the helix angle ($\theta_F$) of said screw gear portion (42a) of said side gear (40) connected to said front propeller shaft (20).

**Patentansprüche**

1. Differentialvorrichtung zur Verwendung in einem Fahrzeug mit Vorderrädern und Hinterrädern, aufweisend:

a) ein Gehäuse (10), das mit einer Kraftquelle des Fahrzeugs verbindbar ist, um mit einem Antriebsdrehmoment versorgt zu werden;

b) ein Paar von vorderen und hinteren Antriebswellen (20, 30), die wirksam mit den Vorder- bzw. Hinterrädern verbunden sind, wobei die Antriebswellen sich längs einer gemeinsamen geraden Linie in das Gehäuse (10) erstrecken, so daß die einen Enden der zwei Antriebswellen in gegenüberliegender Beziehung zueinander in dem Gehäuse angeordnet sind;

c) ein Paar von Nebenrädern (40, 50), die jeweils mit den einen Enden des Paars von vorderen und hinteren Antriebswellen (20, 30) verbunden sind, um Drehungen der zwei Nebenräder jeweils auf die zwei Antriebswellen zu übertragen, wobei jedes der zwei Nebenräder einen Schraubgewinde-Abschnitt (42a, 52a) auf seinem Außenrand aufweist;

d) wenigstens ein Paar von Elementrädern (60, 70), die drehbar an dem Gehäuse (10) angebracht sind, wobei eine Drehachse jedes der Elementräder die Drehachse der Antriebswellen (20, 30) und die Drehachse der Seitenräder (40, 50) schneidet, jedes der Elementräder (60, 70) einen Schraubgewinde-Abschnitt (61) und einen Kopplungsrad-Abschnitt (62) aufweist, die Schraubgewinde-Abschnitte (61) des Paars von Elementrädern mit den Schraubgewinde-Abschnitten (42a, 52a) des Paars von Seitenrädern jeweils kämmen, und die Kopplungsrad-Abschnitte (62) des Paar von Elementrädern miteinander kämmen;

dadurch gekennzeichnet, daß Steigungswinkel bzw. Helixwinkel ($\theta_F$, $\theta_R$) der Schraubgewinde-Abschnitte (42a, 52a) des Paars von Seitenrädern (40, 50) voneinander verschieden sind.

2. Differentialvorrichtung nach Anspruch 1, wobei der Steigungswinkel ($\theta_R$) des Schraubgewinde-Abschnitts (52a) des Seitenrads (50), verbunden mit der hinteren Antriebswelle (30), kleiner ist als der Steigungswinkel ($\theta_F$) des Schraubgewinde-Abschnittes (42a) des Seitenrads (40), verbunden mit der vorderen Antriebswelle (20).

**Revendications**

1. Différentiel à utiliser dans un véhicule comportant des roues avant et des roues arrière, comprenant :

a) un carter (10) pouvant être relié à une source de force motrice du véhicule de manière à être alimenté d'un couple d'entraînement;

b) une paire d'arbres de transmission avant et arrière (20, 30) activement reliés aux roues avant et arrière, respectivement, les deux arbres de transmission s'étendant suivant une ligne droite commune à l'intérieur dudit carter (10), de sorte que les premières extrémités des deux arbres de transmission sont opposées l'une à l'autre à l'intérieur du carter;

c) deux pignons latéraux (40, 50) reliés respectivement auxdites premières extrémités de ladite paire d'arbres de transmission avant et arrière (20, 30) de manière à transmettre les rotations des deux pignons latéraux respectivement aux deux arbres de transmission, chacun des deux pignons latéraux comportant une partie à denture hélicoïdale (42a, 52a) sur sa périphérie externe, et

d) au moins une paire de pignons à éléments (60, 70) montés chacun à rotation sur le carter (10), un axe de rotation de chacun des pignons à éléments coupant l'axe de rotation des arbres de transmission (20, 30) et l'axe de rotation des pignons latéraux (40, 50), chaque pignon à éléments (60, 70) comportant une partie à denture hélicoïdale (61) et une partie à denture d'accouplement (62), les parties à dentures hélicoïdales (61) des deux pignons à éléments engrenant les parties à dentures hélicoïdales (42a, 52a) de la paire de pignons latéraux respectivement et les parties à dentures d'accouplement (62) de la paire de pignons à éléments s'engrenant mutuellement, caractérisé en ce que :

les angles d'hélice ($\Theta_F$, $\Theta_R$) des parties à dentures hélicoïdales (42a, 52a) des deux pignons latéraux (40, 50) sont différents l'un de l'autre.

2. Différentiel suivant la revendication 1, dans lequel l'angle d'hélice ($\Theta_R$) de la partie à denture hélicoïdale (52a) du pignon latéral (50) relié à l'arbre de transmission arrière (30) est plus petit que l'angle d'hélice ($\Theta_F$) de la partie à denture hélicoïdale (42a) du pignon latéral (40) relié à l'arbre de transmission avant (20).

Fig.1

EP 0 408 173 B1

Fig.3

Fig.2

# Fig.4